# EUROPEAN PATENT SPECIFICATION

(11) **EP 1 131 197 B1**
(45) Date of publication and mention of the grant of the patent: **01.09.2004**
(21) Application number: 00970294.5
(22) Date of filing: 20.09.2000
(51) Int. Cl.: B29C 33/56, B29C 33/64

(54) **METHOD OF PROCESSING A RESIN MOLD AND THE RESIN MOLD**
VERFAHREN ZUR BEHANDLUNG EINER HARZFORM UND DADURCH ERHALTENE HARZFORM
PROCEDE DE TRAITEMENT D'UN MOULE EN RESINE ET MOULE EN RESINE AINSI OBTENU

(30) Priority: 20.09.1999 JP 26620999
(43) Date of publication of application: 12.09.2001
(73) Proprietor: DSM IP Assets B.V., 6411 TE Heerlen (NL); JSR Corporation, Tokyo 104-0045 (JP); Japan Fine Coatings Co., Ltd., Tokyo 104-8410 (JP)
(72) Inventor: 3YAMAMURA, Tetsuya, Tsukuba, Ibaraki 305-0045 (JP); KATO, Yukitoshi, Tsuchiura, Ibaraki 300-0033 (JP); TANABE, Takayoshi, Tsukuba, Ibaraki 305-0045 (JP); UKACHI, Takashi, Ushiku, Ibaraki 300-12 (JP)
(74) Representative: Renkema, Jaap
(86) International application number: PCT/NL2000/000672
(87) International publication number: WO 2001/021374

(56) References cited:
- EP-A- 0 311 061
- EP-A- 0 731 157
- EP-A- 0 831 373
- US-A- 4 602 060

## Description

The present invention relates to a process for coating a mold containing a resinous surface and to the coated mold.

Methods for injection molding, vacuum casting molding, etc. are well known in the art. The molds that are used in these well-known methods are conventionally made from materials like metal such as steel and aluminum. Fabrication of such molds is very expensive in itself and the molds that are produced are often not chemically inert. As a solution to the problem of a lack of chemical resistance, the aluminum molds may be coated with resinous layers.

A new form of mold is made by stereolithography. These molds are especially suitable for prototyping and making small numbers of parts. A method of stereolithography or photo-fabrication of a three-dimensional object (hereinafter called a photo-fabricated object) consisting of cured resin layers integrally laminated by repeating a step of selectively irradiating a photocurable resin composition has been proposed (see Japanese Laid-open Patent Application Nos. 247515/1985, 35966/1987, 101408/1987, and 24119/1993).

In recent years, a number of trials have been carried out to produce molds for various molding operations, such as injection molding, press molding, vacuum molding, blow molding, foam molding, pulp molding and-cast molding, by a photo-fabrication method. A photo-fabricated object used as a mold consisting of a cured resin (hereinafter called "resin mold") must have the mechanical strength, pressure resistance, heat resistance and durability which are required for a mold. For injection molding of engineering plastics, which is carried out under high temperature and high pressure conditions, it is particularly desirable to develop a resin composition capable of producing a photo-fabricated object (a cured product) which can withstand such conditions. In response to this demand, the inventors of the present invention have proposed methods for easily manufacturing resin molds exhibiting excellent durability in repeated use (see Japanese Laid-open Patent Applications No. 137027/1996 and No. 250584/1996).

A resin mold obtained by curing for example an epoxy-based resin composition usually has epoxy groups originating from the resin-composition inside the resin mold or near the surface thereof. When a resin such as nylon is injection molded using such a resin mold under high temperature and high pressure conditions, the epoxy groups present near the surface of the resin mold react with amino groups produced by decomposition of amide bonds (-CONH-). This causes the fabricated article to adhere firmly to the molding surface of the resin mold, thereby unduly impairing the mold release properties of the product.

A method of applying an oily release agent such as silicone oil may be one method to overcome this problem. However, removing the molded article from the resin mold using such an oily release agent is very difficult when the functional groups remaining near the molding surface of the resin mold have reacted with the functional groups contained in the fabricated article.

US 6,017,973 describes the use of photo-fabricated molds in vacuum casting molding optionally having a coating layer of a thickness of 5 to 1000 µm. The coating layer is formed of a high molecular weight organic polymer or an inorganic material. The coating layer has been bonded physically to the mold and needs to have a large thickness of at least 5 µm to be effective.

Application of at least a 5 µm coating layer to a photofabricated mold changes the dimensions of the mold in an ill-defined manner. The article prepared in such a mold will reflect these changes and will therefore have dimensions that deviate too much from the design values.

Accordingly, a first object of the present invention is to provide a method of coating a resin mold which can provide the resin mold with excellent releasability and durability even if the molded resin material comprises a functional group that is reactive with the functional group remaining near the molding surface of the resin mold.

A second object of the present invention is to provide a resin mold that can exhibit excellent releasability and durability even if the molded resin material comprises a functional
group that is reactive with the functional group remaining near the molding surface of the resin mold.

A further objective is to provide a photo-fabricated mold that not only has excellent releasibility and durability, but also excellent and accurately defined dimensions.

The problems of the state of the art have been solved by providing a novel method of coating a mold containing a resinous surface, according to Claim 1, which comprises the steps of
i) coating the mold with a release agent that is able to react chemically with the resinous surface of the mold
ii) reacting the coated resin mold under conditions sufficient for a chemical reaction to take place between the resinous surface of the mold and the release agent
iii) optionally removing unreacted release agent from the mold,
wherein the mold is a photo-fabricated article obtained by repeating a step of forming a cured layer of a photocurable resin composition by selectively irradiating the resin composition with light and wherein the coating layer consisting of reacted release agent has a thickness of less than 1 µm.

The invention further comprises a method, according to claim 10, for coating a photo-fabricated mold containing a resinous surface, which comprises the steps of:
i) coating small irregularities which are present on the molding surface of the photo-fabricated resin mold with a photo-curable or heat-curable resin composition,
ii) curing the resin composition to obtain a smooth surface on the resin mold,
iii) applying a release agent to the molding surface of the resin mold that is able to react chemically with the molding surface,
iv) reacting the coated resin mold under conditions sufficient for a chemical reaction to take place between the resinous surface of the mold and the release agent,
v) optionally removing unreacted release agent from the mold and postcuring the coated mold,
wherein the coating layer consisting of reacted release agent has a thickness of less than 1 µm.

The invention additionally comprises a coated mold according to claim 11 and the use of such a mold according to claim 12.

In one preferred embodiment of the invention the surface of the mold is prepared from compounds containing functional groups A. Some functional groups A do not take part in the formation of the mold or the mold surface. These functional groups A may remain near the surface of the mold after formation of the mold (remaining functional groups A).

The reactive release agent contains a functional group B that is able to react chemically with functional group A when the proper reaction conditions are applied. Thereby the release agent is chemically bonded to the surface of the mold.

The coating process of the present invention generates a coated mold with a very thin coating layer on the mold. The thickness of the coating layer containing the release agent is smaller than 1 µm, preferably smaller than 0.5 µm, and most preferably smaller than 0.1 µm. This guarantees the production of molds with dimensions that accurately reflect the design values, while only very small amounts of release agent are needed to obtain a mold with excellent release properties.

Although this invention is directed specifically at cured resin molds, any mold material, for example metal, ceramic, wood, thermoplastic, etc., may benefit from this invention so long as a chemical bond can be formed between the mold surface and the reactive release agent.

The mold containing a resinous surface is a photo-fabricated article obtained by repeating a step of forming a cured layer of a photocurable resin composition by selectively irradiating the resin composition with light. Photo-fabricated molds can be prepared much more precisely, much faster, more flexibly and at lower cost than conventional molds.

A preferred method of coating a photo-fabricated mold comprises the steps of:
i) photo-fabricating the resin mold
ii) washing the resin mold with a suitable solvent
iii) coating the mold with a reactive release agent in a conventional way
iv) reacting the coated resin mold under conditions sufficient for a chemical reaction to take place between the mold surface and the release agent
v) washing the coated mold with a suitable solvent to remove unreacted release agent and
vi) postcuring the washed mold by heating the mold stepwise from a low temperature of about 40 °C to a high temperature of about 180 °C.

Advantages of this preferred method are that it takes less time and yields better release properties due to the coating process being integrated into the mold manufacturing process, and that better adherence of the release agent to the mold is obtained.

Suitable resin compositions and molds may be molds obtained by curing epoxies with, for example, amines, amides, urethanes, isocyanates, imidazoles and imidazolines, cyclic esters of imido acids, mercaptans, polyhydric alcohols, phenols, acid anhydrides, silanes, silanols, acetals, nitriles, acetylenes, alkyl halides, arsines, ketones, imides, oximes, anionic catalysts, cationic catalysts, coordination catalysts, etc. Such cure systems are well known in the art and are detailed in for example, "Epoxy Resins Chemistry and Technology" published by Marcel Dekker, Inc. Other resin molds may be obtained by the curing of a multitude of other resin systems such as melamines, polyester, silicones, potyot/isocyanates, acrylates, etc. so long as a reactive group is present on the mold surface or can be created on the mold surface. The surface may be made reactive by abrasion, solvents, chemical etching, exposure to ionizing radiation and the like. The surface may also be made reactive photochemically by, for example, hydrogen abstraction from a polymer chain in the presence of benzophenone and the like.

Remaining functional groups A in the neighborhood of the molding surface of the resin mold are for example an epoxy group, oxetanyl group, thiirane group, titanyl group and hydroxyl group. Functional groups A that originate from the resin composition preferably are chosen from the group consisting of acrylates, epoxies, vinyl-ethers and mixtures thereof.

The words "in the neighborhood of the molding surface" or "close to the molding surface" indicate the region in which the releasability is affected, for example the region up to a depth of 1000 nm from the molding surface (the base material surface).

Epoxy-based resin compositions such as Desolite 6CR 801 and Desolite SCR 802 (manufactured by JSR Corporation) that are commercially available as direct-type photo-fabrication resins are given as examples of resin compositions preferably used for obtaining such a photo-fabricated resin mold.

A preferred photo-fabrication method for obtaining such a resin mold is the following method: a photocurable resin composition is applied to a support stage to form a thin layer (1), which is selectively irradiated with light to form a solid cured resin layer (1). The liquid resin composition is applied to this cured resin layer (1) to form a thin layer (2). This thin layer (2) is selectively irradiated to form a cured resin layer (2) integrally laminated with the cured resin layer (1). This step is repeated a certain number of times while using either the same or different irradiation patterns to form a three-dimensional object consisting of integrally laminated cured resin layers (n).

The laminated cured resin layer has a thickness of about 5-300 µm, for example, and can be appropriately selected taking into consideration the gradient of the photo-fabricated object (the surface gradient in the direction of the lamination layers), the fabrication time and the like.

The reactive release agent-coated on the molding surface of the resin mold is selected from compounds or resins (oligomers or polymers) that contain the reactive functional group B and are improving the release properties of the mold.

The release agent comprising the functional group B is preferably a resin selected from the group consisting of silicone resins, fluorine-containing resins and hydrocarbon resins.

Examples of functionalized silicone materials useful as release agents are vinyl terminated or branched polydimethylsiloxanes such as DMS-V22, available from Gelest, Inc., Tullytown PA. Other examples are vinyl terminated trifluoropropylmethylsiloxane-dimethylsiloxane copolymers, vinyl terminated diethylsiloxane-dimethylsiloxane copolymers, and vinylmethylsiloxane-dimethylsiloxane copolymers that are trimethylsiloxy terminated. (Moth)acrylate functional siloxanes such as methacryloxypropyl terminated polydimethylsiloxanes, acroyloxy terminated polydimethylsiloxanes, etc., also available from Gelest, may also be used. These agents would be especially useful for stereolithographic molds made from acrylate or hybrid acrylate/epoxy compositions. Such functionalized release agents could be used in conjunction with, for example, peroxide cure agents, such as dibenzoylperoxide, to react the vinyl groups with ethylenically unsaturated sites on the resin mold surface. In such a case, 0.2 to 1 wt% peroxide can be added to the vinyl siloxane and this mixture is applied to the mold surface. The mold with the coating is then preferably heated to approximately 140-160°C, followed by washing to remove peroxide and unreacted monomer. Alternatively, a free radical photoinitiator, such as 1-hydroxycyclohexyl-phenyl ketone, could be added to the vinyl siloxane mixture in an amount of between 0.1 and 10 wt%. This mixture could then be coated on the surface of the mold that is then preferably exposed to UV light to initiate the free radical reaction with ethylenically unsaturated sites on the mold surface. UV curable acrylate terminated silicones are preferred since they are less susceptible to oxygen inhibition during cure and UV curing equipment is readily available at locations that make stereolithographic molds.

Examples of cationically polymerizable silicones useful as release agents are epoxypropoxypropyl terminated polydimethylsiloxane, (epoxycyclohexylethylmethylsiloxane) dimethylsiloxane copolymers, (2-3% epoxycyclohexylethylmethylsiloxane) (10-15% methoxypolyalkyleneoxymethylsiloxane-(dimethylsiloxane)terpolymer, carbinol terminated polydimethylsiloxanes and copolymers, and silanols also available from Gelest. These agents could be combined with various-cationic initiators, such as the complex of boron trifluoride monomethyl amine (BF3:MEA) or any of the cationic photoinitiators such as the hexafluoroantimonate salts of iodoniums or sulfoniums and then coated on the surface of the mold. Next the coated mold could be heated to a temperature that induces the dissociation of the cationic initator and initiates the polymerization of the release agent with the cationically polymerizable functionalities resident on the surface of the mold. Alternatively, the cationic polymerization of the coating could be initiated by exposing the cationic photoinitiators to actinic radiation. BF3:MEA is often used in percentages of around 1% and the photocationic initiators are used in the 0.1-10% range, depending primarily on the wavelength of the light source.

Anhydride functional silicones such as succinic anhydride terminated polydimethylsiloxane available from for example Gelest may also be used as a functionalized release agent in a manner similar to the amino functionalized silicones.

Release agents based upon perfluorinated functionalized compounds are also useful. Such compounds may be for example, 1H,1H-perfluoropontan-1-ol, 1H,1H,2H-perfluoro-(1,2-epoxy)hexane and other functional derivatives. More preferred are the perfluoroalkyl compounds terminated at one or more ends by a (CH2)nR group where n is 1 to 10 and R is a functional group such as a vinyl, (meth)acrylate, epoxy, oxetane, vinyl ether, etc. Perfluorinated cyclic compounds with pendant functional or (CH2)nR groups may also be useful functionalized release agents.

Functional groups B preferably comprise acrylates, epoxies, vinyl ethers (which may be initiated by addition of an initiator or which are initiated by exposure of a photoinitiator), amino groups, mercapto, hydroxyl, isocyanate and carboxyl groups.

Most preferably the functional group B is a group selected from the group consisting of amino groups, mercapto groups, hydroxyl groups, isocyanate groups and carboxyl groups.

Given as specific examples of preferred reactive release agents are silicone oils of which both the terminal groups are modified with amino groups of the following formula (1), silicone oil of which the side chains are modified with amino groups of the following formula (2), mercapto-modified silicone oil of the following formula (3) and phenol-modified silicone oil of the following formula (4). Of these, amino-modified silicone oil of the following formula (1) or (2) is particularly preferred for a resin mold containing remaining epoxy groups. 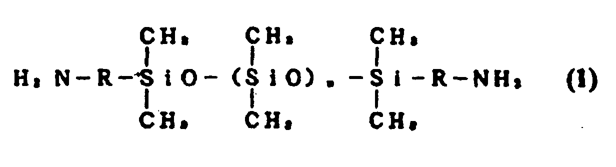 wherein R represents a divalent organic group, n represents a recurring unit, and the equivalent weight of NH₂ is 650-2200. 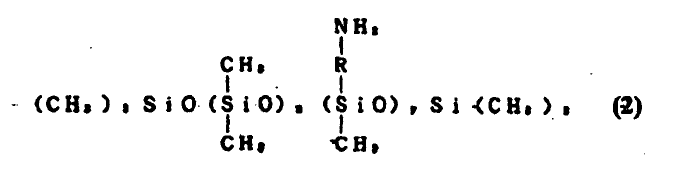 wherein R represents a divalent organic group, x and y represent recurring units, and the equivalent weight of NH₂ is 600-4000. 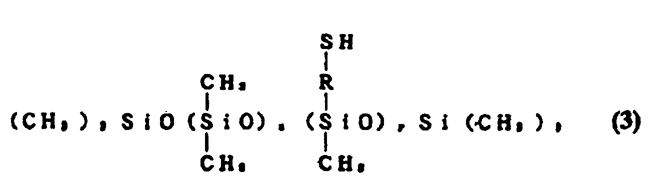 wherein R represents a divalent organic group, x and y represent recurring units, and the equivalent weight of SH is 3300. 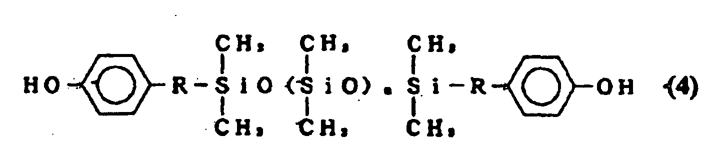 wherein R represents a divalent organic group, n represents a recurring unit, and the equivalent weight of OH is 3300.

Where the modified silicone oils of the above formulas (1)-(5) are used as the reactive release agent, non-modified silicone oils such as common silicone oil (dimethyl silicone oil), methylphenyl silicone oil, methyl hydrogen silicone oil, alkyl-modified silicone oil and the like-can be used together as a diluent for the the modified silicone oil.

Most preferred are resins containing an epoxy group as a functional group A and a release agent comprising amino-group modified-silicone oil as the functional group B.

The viscosity of the reactive release agent is usually 10-50,000 cps (25°C), and preferably 30-18,000cps (25°C).

It is most preferred that the reaction of the mold surface and the reactive release agent be a terminating reaction rather than, for example, a polyaddition reaction. This ensures not only that the release agent is chemically bonded to the mold surface but also that fewer or no reactive groups reside on the mold/release agent surface.

The mold can be coated with the functional release agent in a conventional way; for example by dipping, using a brush or spatula or spraying the release agent.

The reaction of the mold and the release agent is depending on the type of functional groups A and B that are present. It is part of the knowledge of one skilled in the art to find the right conditions for reacting the mold and the release agent. Usually a temperature rise between 30 and 100 °C during a period of a few minutes to several hours will be sufficient. Preferably, the temperature will be between 40 and 90 °C. It may also be necessary to use radiation like UV radiation in case the functional groups B of the release agent react faster when irradiated, for example when B is an acrylate functional group.

Removal of the unreacted release agent maybe effected by washing the surface of the coated mold with a suitable solvent. Methods like wiping, evacuation and drying are also suitable. Preferably the unreacted release agent is removed. Advantages of removal of the unreacted release agent are a cleaner molding process (especially for the first molded parts), more accurately molded articles and no or less environmental exposure.

A different embodiment of the present invention comprises:
coating small irregularities which are present on the molding surface of a photo-fabricated resin mold with a photo-curable or heat-curable resin composition, curing the resin composition to obtain a smooth surface on the resin mold, and applying a release agent to the molding surface of the resin mold, the release agent having a functional group D that is reactive with the functional group C originating from the resin composition and remains in the neighborhood of the molding surface, and reacting the functional group C and the functional group D, thereby chemically bonding the base resin and the release agent.

The coated mold of the present invention comprises a release agent that is chemically bonded with the base resin on at least part of the molding surface. The coating layer of the mold is very thin: in general smaller than 1 µm, preferably smaller than 0.5 µm and most preferably smaller than 0.1 µm.

At least part of the molding surface of the resin mold of the present invention is processed by any one of the methods described above.

The resin mold of the present invention is suitably used for injection molding or cast molding.

The-processing method will now be described for the case in which the amino-modified silicone oil of the above formula (1) or (2) is applied to the surface of the resin mold obtained by curing an epoxy-based resin composition, upon which the epoxy groups remaining in the resin mold and the amino groups in the amino-modified silicone oil are allowed to react, thereby chemically bonding the base resin of the resin mold and the amino-modified silicone oil.

There are no specific limitations to the method of applying the amino-modified silicone oil that is the release agent. A dipping method, a method of using a brush or spatula, a method of spraying the composition and the like can be given as examples.

There are also no specific limitations to the amount of amino-modified silicone oil to be applied. When an excess amount is applied, excessive coating (unreacted reactive release agent) can easily be removed by a washing process that will be described below, after chemically bonding the base resin present on the surface of the resin mold and the amino-modified silicone oil.

The reaction between the epoxy groups (remaining functional group A) in the neighborhood of the molding surface of the resin mold and the amino group (reactive functional group B) in the amino-modified silicone oil causes chemical binding of the base resin on the surface of the resin mold and the amino-modified silicone oil.

The reaction between the epoxy group and the amino group (the fixing reaction of the release agent) is effected by the heat treatment of the coatings of the amino-modified silicone oil. Although heating conditions vary according to the type of functional groups, the heat treatment is carried out at 40-100°C for 10-120 minutes, for example.

After heat treatment, unreacted amino-modified silicone oil is removed by washing with an organic solvent or the like.

The molding surface processed in this manner has the release agent immobilized to the base resin via a chemical bond so that the release agent is not removed by washing with a solvent or similar means. Because the release agent is fixed to the molding surface, the effect of the release agent, such as a reduction in the coefficient of friction due to the formation of a silicone membrane, can be achieved homogeneously without fail. This is the effect that cannot be seen when a conventional oily release agent (silicone oil) is applied.

In addition, minute configurations present on the molding surface (the surface of the base material) are not affected by such surface processing.

Furthermore, because the epoxy groups (remaining functional group A) in the neighborhood of the molding surface are eliminated by the reaction with the amino groups in the amino-modified silicone oil (reactive functional group B), no chemical bonds are produced between the fabricated product and the resin mold even if the molded material contains a functional group (e.g. amino group) which is reactive with the epoxy group. The fabricated product can thus easily be removed from the resin mold.

A further embodiment of the present invention is a process in which small irregularities (small level differences due to a laminated structure) which are present on the molding surface of the photo-fabricated resin mold are coated with a photo-curable or heat-curable resin composition, the resin composition is cured to provide a smooth surface on the resin mold, a release agent (which has a functional group D that is reactive with the functional group C which originates from the coating resin composition and remains in the neighborhood of the molding surface) is applied to the molding surface of the resin mold and the coated mold is subjected to reaction conditions to cause the functional group C and the functional group D to react, thereby chemically bonding the base resin and the release agent.

The surface obtained by this processing method has no level differences originating from a laminated layer structure. The molding surface is smooth, precisely in accord with the design data, and can produce fabricated objects having a very accurately defined and excellent surface.

Because using the resin mold processed in this manner can reduce the contact area between the molding surface and the fabricated object, the mold release properties of the fabricated object are further improved.

The same groups as given for the remaining functional group A can be given for the functional group C originating from the coating resin composition. The same groups as given for the reactive functional group B can be given for the functional group D that is reactive with the functional group C.

The method described in Japanese Patent Application 128352/1999 filed by the inventors of the present invention is given as a specific processing method for covering small level differences that are present on the molding surface of the resin mold.

The resin mold of the present invention comprises a release agent that forms a chemical bond with the base resin on at least part of the molding surface. In addition, the resin mold of the present invention has a molding surface at least part of which has been processed by the above-described processing method.

The resin mold of the present invention is suitably used for molding operations carried out under high temperature and high pressure conditions, typically for injection molding or cast molding. In addition, the resin mold of the present invention can also be used for various other molding operations such as press molding, vacuum molding, compressed air forming, foam molding and pulp molding. The resin mold of the present invention is particularly suitable for fabricating resin materials such as nylon which contain or produce a functional group (for example an amino group) that is reactive with the above-mentioned remaining functional group A (for example an epoxy group). Of course, other materials can also suitably be used.

The resin mold of the present invention is particularly suitable for use in injection molding of materials containing glass fillers and engineering plastic materials fabricated under high temperature and high pressure conditions.

When using the resin mold of the present invention in injection molding, it is possible to apply an oily release agent to the molding surface according to conventional methods. Modified or non-modified silicone oil, vegetable oil, fluorine-containing oil and the like can be used as such an oily release agent.

### Examples

The present invention will now be described in detail by means of examples, which should not be construed as limiting the present invention.

### Example of the preparation of a resin mold by photo-fabrication

Cavity molds and core molds were formed from an epoxy-based photo-fabrication resin for direct molding "Desolite SCR801" (manufactured by JSR Corporation) using photo-fabrication equipment "Solid Creator JSC-2000" (manufactured by SONY Corp.) under the following conditions (1) to (5). The resin composition adhering to the surface of the resulting photo-fabrication resin molds (cavity molds and core molds) was wiped off. After washing with a solvent, the products were dried at ambient temperature.

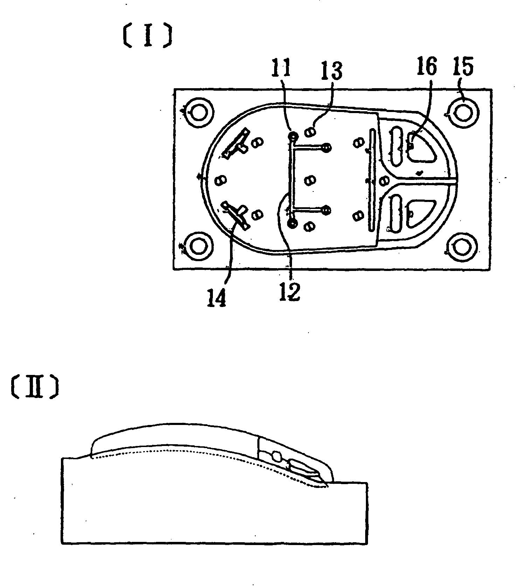

Figure 1 is a plan view (I) and a side view (II) of a core mold. In this Figure, 11 is a pin form, 12 a rib, 13 a pin form, 14 a nail, 15 a screw hole for securing, and 16 a pin form.
(1) Intensity of laser beam at the liquid surface: 100 mW
(2) Scanning speed: optimum scanning speed at which the cure depth of each composition was 0.3 mm
(3) Thickness of cured resin layer: 0.2 mm
(4) Number of layers in the cavity mold: 306
(5) Number of layers in the cavity mold: 220

### Example 1

Amino-modified silicone oil "SF8417" (manufactured by Toray-Dow-Corning Silicone Co., Ltd.), was thoroughly applied as a reactive release agent to the molding surface of the resin mold (cavity mold and core mold) prepared in the Preparation Example using a brush. The resin mold was then heat-treated in an oven at 40°C for 60 minutes. The amino-modified silicone oil remaining on the molding surface of the resin mold was removed by washing with ethyl alcohol, and the mold was dried to remove ethyl alcohol at room temperature. The fabricated object was then subjected to heat-treatment in an oven at 160°C for 120 minutes to obtain the resin mold of the present invention (hereinafter called "Resin mold (1)").

### Example 2

### (i) Preparation of coating resin composition

A reaction vessel with a stirrer was charged with 74 parts by weight of epoxy resin (3,4-epoxycyclohexylmethyl-3,4-epoxycyclohexanecarboxylate) of formula (i), 25 parts by weight of epoxy resin of formula (ii), and 1 part by weight of a cationic polymerization photo-initiator "UVI-6970" (manufactured by Union Carbide Corp.). The mixture was stirred for 2 hours at 50ºC to obtain a resin composition with a viscosity of 180 cp at 25ºC (hereinafter called "resin composition (1)").

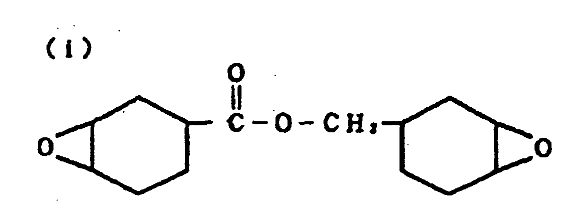

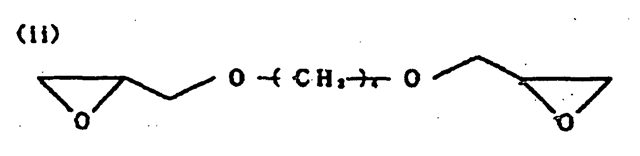

### (ii) Treatment for smoothing molding surface

The resin composition (1) was applied to the resin mold (cavity mold and core mold) produced in the above Preparation Example using a brush to eliminate small level differences on the surface.

The coated film of the resin composition (1) was then irradiated with ultraviolet radiation at 1 J/cm² using UV irradiation equipment "SPOTCURE SP-III" (manufactured by Ushio Inc.). The photo-fabricated object (cavity mold and core mold) was then heat-treated in an oven at 80°C for two hours to obtain a smooth molding surface.

### (iii) Coating with reactive release agent and heat-treatment

A resin mold of the present invention (hereinafter called "Resin mold (2)") was prepared in the same manner as in Example 1, except for using the resin mold of which the surface was smoothed by the procedure (ii) for coating with the reactive release agent.

### Comparative Example 1

The resin mold (cavity mold and core mold) produced in the above Preparation Example was heat-treated in an oven at 160°C for 120 minutes to obtain a comparative resin mold (hereinafter called "Resin mold (3)").

### Evaluation of resin molds (injection molding)

The resin molds (1)-(3) obtained in the Example 1-2 and Comparative Example 1 were used for injection molding together with glassfiber-reinforced nylon 6 (glassfiber content: 30%) "Ubenylon 6 1015GC950" (manufactured by Ube Industries, Ltd.) as a molding material under the following conditions: clamping force 75 tons, cylinder temperature 280°C, mold temperature 80°C, injection pressure 200 kg/cm², first step pressure 360 kg/cm² (4 seconds), and second step pressure of 230 kg/cm² (6 seconds). Before injection molding, a vegetable oil release agent "Berycoat 3S-5" (manufactured by Chukyo Kasei Industry, Ltd.) was applied to the molding surfaces of the resin molds (1)-(3) by spraying.
(1) The dimensional accuracy of the resulting fabricated objects, (2) the surface conditions of the resulting fabricated objects, and (3) the durability of the resin molds upon repeated use were evaluated as follows. Results are shown in Table 1.

### Evaluation of dimensional accuracy of fabricated objects

Injection products with a deviation of less than 0.5% and those with a deviation of 0.5% or more from the design size were rated as "Good" and "Bad", respectively.

### Surface conditions of fabricated objects

The surface conditions were evaluated by measuring the surface roughness using a surface roughness meter, Surfcom 575A (manufactured by Tokyo Seimitu Co., Ltd.), at a scanning speed of 1.5 mm/s.

The products with surface roughness of less than 5 µm were rated as "AAA" and those with a surface roughness of more than 5 µm as "BBB".

### Repeated use durability of resin molds

Injection molding was continuously carried out using the resin molds to determine the number of times that the resin molds could fabricate the objects (shot number) before the molds became unusable.

**Table 1**

| | Resin Mold (1) | Resin Mold (2) | Resin Mold (3) |
|---|---|---|---|
| Releasing layer (immobilized coating) | Formed | Formed | None |
| Smoothing processing | Performed | Performed | Not performed |
| Dimensional accuracy of the fabricated objects | Good | Good | Good |
| Surface conditions of the fabricated objects | BBB | AAA | BBB |
| Durability (number of molding operations) | Over 50 | Over 50 | 5 |

### Experimental Example

The following experiments were conducted to confirm the improvement in the release properties obtained by the method of processing according to the present invention.

### (1) Preparation of test specimens

The epoxy-based photo-fabrication resin for direct molding "Desolite SCR801" (manufactured by JSR Corporation) used in the Preparation Example was coated on a glass plate using an applicator, and the coating was irradiated with UV rays from the ultraviolet irradiation apparatus "UBX0311-00" (manufactured by Eye Graphics Co., Ltd.) to obtain a cured film (made from the same resin material as the resin mold) with a thickness of 200 µm on the glass plate. The irradiation dose was 100 mJ/cm².

Three glass substrates were prepared on which the cured film was formed in this manner. The amino-modified silicone oil "SF8417" (manufactured by Toray-Dow Corning Silicone-Co., Ltd.) used in Examples 1 and 2 was applied to the surface of a first cured film using a brush to obtain a test specimen (A). Dimethyl silicone oil "SH200" (manufactured by Toray-Dow Coming Silicone Co., Ltd.) was applied to the surface of a second cured film using a brush to obtain a test specimen (B). No release agent was applied to the remaining, third cured film, which is designated as a test specimen (C).

### (ii) Evaluation of releasability

The test specimens (A) to (C) prepared in (i) above were allowed to stand for 10 minutes at room temperature before being heat-treated in an oven at 40°C for 60 minutes. The surfaces of the cured films were washed with n-hexane.

The surface properties (releasability) of the test specimens thus heat-treated and washed were evaluated as follows. The surface of the test specimen was scratched with a nail and the resulting feeling was evaluated. The test specimens imparting a smooth feeling were rated as "Good" and those imparting a scratching feeling were rated as "Bad". The results are shown in Table 2.

**Table 2**

| | Smoothness |
|---|---|
| Test specimen (A) | Good |
| Test specimen (B) | Bad |
| Test specimen (C) | Bad |

The following findings were obtained from the results of evaluation.
(1) The surfaces of cured films are improved and use of the reactive release agent (the amino-modified silicone oil) gives an excellent releasing effect.
   Washing with solvents did not eleminate this excellent releasing effect. The reactive release agent was confirmed to be firmly adhering to the surface of the cured films.
   Accordingly, the use of a release agent exhibiting reactivity to the substrate that has a remaining functional group A can ensure releasability for a long period of time.
(2) Because conventional silicone oil does not possess such reactivity, the silicone oil exhibits almost no effect of adhering to cured films and is easily removed by washing with solvent. Accordingly, merely applying conventional silicone oil to the substrate cannot ensure releasability for a long period of time.

### Brief Description of the Drawings

### Figure 1

Figure 1 is a plan view (I) and side view (II) of a core mold obtained in Preparation Example.

### Explanation of Symbols

- 1.: Photo-fabricated object
- 2.: Coating
- 11.: Pin form
- 12.: Rib
- 13.: Pin form
- 14.: Nail
- 15.: Securing screw hole

## Claims

1. A method of coating a mold containing a resinous surface which comprises the steps of
i) coating the mold with a release agent that is able to react chemically with the resinous surface of the mold
ii) reacting the coated resin mold under conditions sufficient for a chemical reaction to take place between the resinous surface of the mold and the release agent
iii) optionally removing unreacted release agent from the mold,
wherein the mold is a photo-fabricated article obtained by repeating a step of forming a cured layer of a photocurable resin composition by selectively irradiating the resin composition with light and wherein the coating layer consisting of reacted release agent has a thickness of less than 1 µm.

2. The method according to claim 1, wherein the resinous surface is having functional groups A that originate from the resin composition which are chosen from the group consisting of acrylates, epoxies, vinyl-ethers and mixtures thereof.

3. Method according to claim 1 or 2, wherein the release agent comprises a functional group B which comprises acrylates, epoxies, vinyl ethers, amino groups, mercapto, hydroxyl, isocyanate or carboxyl groups.

4. Method according to claim 1 or 2 wherein the release agent contains a functional group that is selected from the group consisting of amino groups, mercapto groups, hydroxyl groups, isocyanate groups, and carboxyl groups.

5. Method according to any of claims 1-4 wherein the release agent is a resin selected from the group consisting of silicone resins, fluorine-containing resins, and hydrocarbon resins.

6. Method according to any of claims 1-4 wherein the release agent is a vinyl terminated or branched polydimethylsiloxanes.

7. Method according to any of claims 1-4 wherein the release agent is a epoxypropoxypropyl terminated polydimethylsiloxane; (epoxycyclohexylethylmethylsiloxane) dimethylsiloxane copolymers; a terpolymer of (2-3% epoxycyclohexylethylmethylsiloxane), (10-15% methoxypolyalkyleneoxymethylsiloxane) and (dimethylsiloxane); or carbinol terminated polydimethylsiloxanes and copolymers.

8. Method according to any of claims 1-4 wherein the release agent is an anhydride functional silicone

9. Method according to any of claims 1-5 wherein the resinous surface comprises an epoxy group and the release agent is an amino-group modified silicone oil.

10. Method for coating a photo-fabricated mold containing a resinous surface, which comprises the steps of:
i) coating small irregularities which are present on the molding surface of the photo-fabricated resin mold with a photo-curable or heat-curable resin composition,
ii) curing the resin composition to obtain a smooth surface on the resin mold,
iii) applying a release agent to the molding surface of the resin mold that is able to react chemically with the molding surface,
iv) reacting the coated resin mold under conditions sufficient for a chemical reaction to take place between the resinous surface of the mold and the release agent,
v) optionally removing unreacted release agent from the mold and postcuring the coated mold;
wherein the coating layer consisting of reacted release agent has a thickness of less than 1 µm.

11. A coated mold obtainable by the reaction of a release agent and a photo-fabricated mold having a resinous surface, the release agent comprising at least a functional group that is able to react chemically with the resinous surface of the mold according to any of the methods as described in claims 1-9, and wherein the coating layer consisting of reacted release agent has a thickness of less than 1 µm.

12. Use of the coated mold according to claim 11 for molding of parts of different kinds of substrates.

## Patentansprüche

1. Verfahren zum Beschichten einer Form, enthaltend eine harzhaltige Oberfläche, welches die Schritte
i) des Beschichtens der Form mit einem Trennmittel, das befähigt ist, chemisch mit der harzhaltigen Oberfläche der Form zu reagieren,
ii) des Reagierens der beschichteten Harzform unter Bedingungen, die ausreichend sind, daß eine chemische Reaktion zwischen der harzhaltigen Oberfläche der Form und dem Trennmittel stattfindet,
iii) gegebenenfalls des Entfernens von nicht-reagiertem Trennmittel von der Form,
umfasst, wobei die Form ein photoerzeugter Gegenstand ist, erhalten durch Wiederholen eines Schritts des Bildens einer beschichteten Schicht einer photohärtbaren Harzzusammensetzung durch selektives Bestrahlen der Harzzusammensetzung mit Licht und wobei die Beschichtungsschicht, bestehend aus reagiertem Trennmittel, eine Dicke von weniger als 1 µm aufweist.

2. Verfahren nach Anspruch 1, wobei die harzhaltige Oberfläche eine solche ist, die funktionale Gruppen A aufweist, die von der Harzzusammensetzung stammen, welche aus der Gruppe, bestehend aus Acrylaten, Epoxiden, Vinylethern und Gemischen davon, gewählt werden.

3. Verfahren nach Anspruch 1 oder 2, wobei das Trennmittel eine funktionale Gruppe B umfaßt, welche Acrylate, Epoxide, Vinylether, Aminogruppen, Mercapto-, Hydroxyl-, Isocyanat- oder Carboxylgruppen umfaßt.

4. Verfahren nach Anspruch 1 oder 2, wobei das Trennmittel eine funktionale Gruppe enthält, die aus der Gruppe, bestehend aus Aminogruppen, Mercaptogruppen, Hydroxylgruppen, Isocyanatgruppen und Carboxylgruppen, ausgewählt ist.

5. Verfahren nach einem der Ansprüche 1 bis 4, wobei das Trennmittel ein Harz ist, ausgewählt aus der Gruppe, bestehend aus Silikonharzen, Fluorenthaltenden Harzen und Kohlenwasserstoffharzen.

6. Verfahren nach einem der Ansprüche 1 bis 4, wobei das Trennmittel ein Vinylterminiertes oder verzweigtes Polydimethylsiloxan ist.

7. Verfahren nach einem der Ansprüche 1 bis 4, wobei das Trennmittel ein Epoxypropoxypropyl-terminiertes Polydimethylsiloxan, (Epoxycyclohexylethylmethylsiloxan)dimethylsiloxan-Copolymere, ein Terpolymer von (2-3% Epoxycyclohexylethylmethylsiloxan), (10-15% Methoxypolyalkylenoxymethylsiloxan) und (Dimethylsiloxan), oder Carbinol-terminierte Polydimethylsiloxane und Copolymere ist.

8. Verfahren nach einem der Ansprüche 1 bis 4, wobei das Trennmittel ein Anhydrid-funktionales Silikon ist.

9. Verfahren nach einem der Ansprüche 1 bis 5, wobei die harzhaltige Oberfläche eine Epoxygruppe umfaßt und das Trennmittel ein Aminogruppen-modifiziertes Silikonöl ist.

10. Verfahren zum Beschichten einer photoerzeugten Form, enthaltend eine harzhaltige Oberfläche, welches die Schritte umfaßt:
i) Beschichten kleiner Unregelmäßigkeiten, welche auf der Formoberfläche der photoerzeugten Harzform vorliegen, mit einer photohärtbaren oder wärmehärtbaren Harzzusammensetzung,
ii) Härten der Harzzusammensetzung unter Erhalten einer glatten Oberfläche auf der Harzform,
iii) Aufbringen eines Trennmittels auf die Formoberfläche der Harzform, welches befähigt ist, chemisch mit der Formoberfläche zu reagieren,
iv) Reagieren der beschichteten Harzform unter Bedingungen, die ausreichend sind, daß eine chemische Reaktion zwischen der harzhaltigen Oberfläche der Form und dem Trennmittel stattfindet,
v) gegebenenfalls Entfernen des nicht-reagierten Trennmittels von der Form und Nachhärten der beschichteten Form,
wobei die Beschichtungsschicht, die aus reagiertem Trennmittel besteht, eine Dicke von weniger als 1 µm aufweist.

11. Beschichtete Form, erhältlich durch die Reaktion eines Trennmittels und einer photoerzeugten Form mit einer harzhaltigen Oberfläche, wobei das Trennmittel mindestens eine funktionale Gruppe umfaßt, die befähigt ist, chemisch mit der harzhaltigen Oberfläche der Form zu reagieren, gemäß einem der Verfahren, wie in den Ansprüchen 1 bis 9 beschrieben, und wobei die Beschichtungsschicht, welche aus reagiertem Trennmittel besteht, eine Dicke von weniger als 1 µm aufweist.

12. Verwendung der beschichteten Form gemäß Anspruch 11 zum Formen von Teilen verschiedener Arten von Substraten.

## Revendications

1. Procédé pour revêtir un moule contenant une surface résineuse qui comprend les étapes consistant à :
i) revêtir le moule avec un agent de démoulage qui peut réagir chimiquement avec la surface résineuse du moule ;
ii) faire réagir le moule de résine revêtu dans des conditions suffisantes pour qu'une réaction chimique ait lieu entre la surface résineuse du moule et l'agent de démoulage ;
iii) retirer éventuellement l'agent de démoulage n'ayant pas réagi du moule ;
dans lequel le moule est un article photo-fabriqué obtenu en répétant une étape consistant à former une couche durcie d'une composition de résine photodurcissable en irradiant sélectivement la composition de résine avec une lumière et dans lequel la couche de revêtement composée de l'agent de démoulage ayant réagi a une épaisseur inférieure à 1 µm.

2. Procédé selon la revendication 1, dans lequel la surface résineuse a des groupes fonctionnels A qui proviennent de la composition de résine qui sont choisis dans le groupe formé par les acrylates, les époxydes, les éthers vinyliques et leurs mélanges.

3. Procédé selon la revendication 1 ou 2, dans lequel l'agent de démoulage comprend un groupe fonctionnel B qui comprend les acrylates, les époxydes, les éthers vinyliques, les groupes amino, les groupes mercapto, hydroxyle, isocyanate ou carboxyle.

4. Procédé selon la revendication 1 ou 2, dans lequel l'agent de démoulage contient un groupe fonctionnel qui est choisi dans le groupe formé par les groupes amino, les groupes mercapto, les groupes hydroxyle, les groupes isocyanate et les groupes carboxyle.

5. Procédé selon l'une quelconque des revendications 1 à 4, dans lequel l'agent de démoulage est une résine choisie dans le groupe formé par les résines de silicone, les résines contenant du fluor et les résines hydrocarbonées.

6. Procédé selon l'une quelconque des revendications 1 à 4, dans lequel l'agent de démoulage est un polydiméthysiloxane ramifié ou à terminaison vinylique.

7. Procédé selon l'une quelconque des revendications 1 à 4, dans lequel l'agent de démoulage est un polydiméthylsiloxane à terminaison époxypropoxypropyle ; les copolymères (époxycyclohexyléthylméthylsiloxane)diméthylsiloxane ; un terpolymère de (2 à 3% d'époxycyclohexyléthylméthylsiloxane), (10 à 15% de méthoxypolyalkylèneoxyméthylsiloxane) et de (diméthylsiloxane) ; ou les polydiméthylsiloxanes à terminaison carbinol et les copolymères.

8. Procédé selon l'une quelconque des revendications 1 à 4, dans lequel l'agent de démoulage est une silicone à fonction anhydride.

9. Procédé selon l'une quelconque des revendications 1 à 5, dans lequel la surface résineuse comprend un groupe époxyde et l'agent de démoulage est une huile de silicone modifiée par un groupe amino.

10. Procédé pour revêtir un moule photo-fabriqué contenant une surface résineuse, qui comprend les étapes consistant à :
i) revêtir des petites irrégularités qui sont présentes sur la surface de moulage du moule de résine photo-fabriqué avec une composition de résine photo-durcissable ou thermo-durcissable ;
ii) durcir la composition de résine pour obtenir une surface lisse sur le moule de résine :
iii) appliquer un agent de démoulage à la surface de moulage du moule de résine qui peut réagir chimiquement avec la surface de moulage ;
iv) faire réagir le moule de résine revêtu dans des conditions suffisantes pour qu'une réaction chimique se produise entre la surface résineuse du moule et l'agent de démoulage ;
v) éliminer éventuellement l'agent de démoulage n'ayant pas réagi, du moule et recuire le moule revêtu ;
dans lequel la couche de revêtement composée d'un agent de démoulage ayant réagi a une épaisseur inférieure à 1 µm.

11. Moule revêtu pouvant être obtenu par la réaction d'un agent de démoulage et d'un moule photo-fabriqué ayant une surface résineuse, l'agent de démoulage comprenant au moins un groupe fonctionnel qui peut réagir chimiquement avec la surface résineuse du moule selon l'un quelconque des procédés tels que décrits dans les revendications 1 à 9, et dans lequel la couche de revêtement composée d'un agent de démoulage ayant réagi a une épaisseur inférieure à 1 µm.

12. Utilisation du moule revêtu selon la revendication 11, pour mouler des parties de différents types de substrats.
